# EUROPEAN PATENT SPECIFICATION

(11) **EP 3 177 452 B1**
(45) Date of publication and mention of the grant of the patent: **15.07.2020**
(21) Application number: 15752978.5
(22) Date of filing: 05.08.2015
(51) Int. Cl.: B29C 64/165, B33Y 10/00, B33Y 80/00, B29L 31/00

(54) **METHOD FOR THE ADDITIVE MANUFACTURE OF A THREE-DIMENSIONAL OBJECT COMPRISING OR FORMING A COSMETIC COMPOSITION BY APPLICATION OF A POWDER BINDING ACTIVATOR, ASSOCIATED OBJECT**
VERFAHREN ZUR GENERATIVEN FERTIGUNG EINES DREIDIMENSIONALEN OBJEKTS MIT ODER ZUR FORMUNG EINER KOSMETISCHEN ZUSAMMENSETZUNG DURCH ANWENDUNG EINES PULVERBINDUNGSAKTIVATORS, ZUGEHÖRIGES OBJEKT
PROCÉDÉ DE FABRICATION ADDITIVE D'UN OBJET TRIDIMENSIONNEL COMPRENANT OU FORMANT UNE COMPOSITION COSMÉTIQUE PAR APPLICATION D'UN ACTIVATEUR DE LIAISON EN POUDRE ET OBJET ASSOCIÉ

(30) Priority: 05.08.2014 FR 1457613
(43) Date of publication of application: 14.06.2017
(73) Proprietor: L'Oréal, 75008 Paris (FR)
(72) Inventor: JAUNET, Clément, F-78140 Velizy Villacoublay (FR); LORENTE GONZALEZ, Sonia, F-94300 Vincennes (FR)
(74) Representative: Lavoix
(86) International application number: PCT/EP2015/068094
(87) International publication number: WO 2016/020454

(56) References cited:
- WO-A1-2014/039378
- US-B1- 6 799 959
- John Newman: "Mink brings 3D printing power to the beauty market", internet , 12 May 2014 (2014-05-12), XP002737634, Retrieved from the Internet: URL:http://www.rapidreadytech.com/2014/05/ mink-brings-3d-printing-power-to-the-beaut y-market/ [retrieved on 2015-03-23]

## Description

This invention relates to a method for the manufacture of a three-dimensional object comprising or forming a cosmetic composition and to a three-dimensional object comprising or forming a cosmetic composition.

The cosmetic composition contains at least one cosmetic product, in particular a makeup product, a care product, a washing product or a perfume, the cosmetic product being intended to be applied on a surface of the body of a user.

More generally, "cosmetic product" means in particular, in the sense of this invention, a product such as defined in Regulation (EC) no. 1223/2009 of the European Parliament and of the Council of November 30, 2009 relating to cosmetic products.

The three-dimensional object as such forms advantageously a makeup powder, in particular an eye shadow, a foundation, a bronzer, or a blush, in the form of a compact powder, a hybrid powder or a wet powder. Alternatively, the three-dimensional object forms a deodorant and/or antiperspirant product, a soap, a solid shampoo or/and a solid perfume.

In order to manufacture a three-dimensional object comprising a cosmetic composition, it is known to use methods for forming such as molding, filling, compaction, multi-compaction, wet powder injection, extrusion, etc.

Such methods for manufacture impose constraints on the objects manufactured. In molding, the objects generally have a cutting limit, with a maximum undercut possible when they are molded, even in a flexible mold.

The methods of molding also limit the complexity of the shapes, since it is impossible to create a part in another, or to nest one part in another.

In all of the aforementioned methods, the height of the product is a limiting factor. Complex shapes, in particular three-dimensional are very difficult, and even impossible to create, and often very expensive. The methods for compacting, multicompacting and injecting slurry are also limited in terms of height of the finished product.

There are also limits in the coloring of the cosmetic composition, in particular in the number of colors that can be used, and in the control of the various colors in the cast mass. It is in particular tedious to create objects that have different colors and/or color shading, and/or graphic inscriptions, for example alphanumeric characters and/or juxtapositions of colors.

The aforementioned methods are also limited in the implementation of different precursor materials in order to form the cosmetic composition. It is for example tedious to create via the same method an object formed of cosmetic products of different natures and compositions.

Another difficulty results from the fact that the method of the aforementioned type are intended solely for the formation of the three-dimensional object.

In certain cases, it is necessary to prepare upstream of the formation at least one bulk, which complicates the manufacture in certain cases.

Moreover, when new objects integrating cosmetic compositions are developed, it is generally useful to create working models making it possible to determine the feasibility and the interest of the object.

These models are complex to create, and require many steps comprising the development of the formula, the manufacture of the bulk, the creating of a special tool, and product packaging or formation tests.

These tests sometimes have to be conducted several times before a satisfactory result is obtained, which increases development time and costs.

The additive manufacturing of three-dimensional objects is described in documents WO 2014/039378 A1. The article of "Mink brings 3D printing power to the beauty market", by John Newman, discloses customizing a color and composition of an object.

One aim of the invention is to provide a simple and versatile method for manufacturing three-dimensional objects comprising a cosmetic composition, with the objects able to have complex shapes, natures and appearances.

For this purpose, the invention relates to a method according to claim 1.

The method according to the invention can include one or more of the features from claims 2 to 14, taken alone or in any technically possible combination.

The invention also relates to a three-dimensional object according to claim 15.

The invention will be easier to understand in view of the following description, provided solely as an example, and with reference to the appended drawings, wherein:
- figure 1 is a diagrammatic view of an example of an apparatus, intended for the manufacture of a three-dimensional object comprising a cosmetic composition by a method according to the invention;
- figures 2 to 4 show examples of three-dimensional objects created by a method according to the invention.

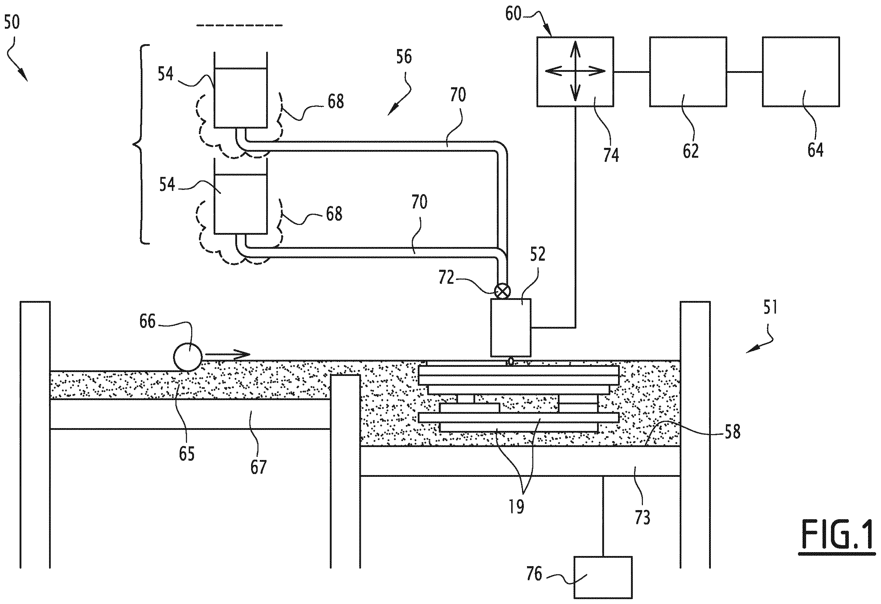

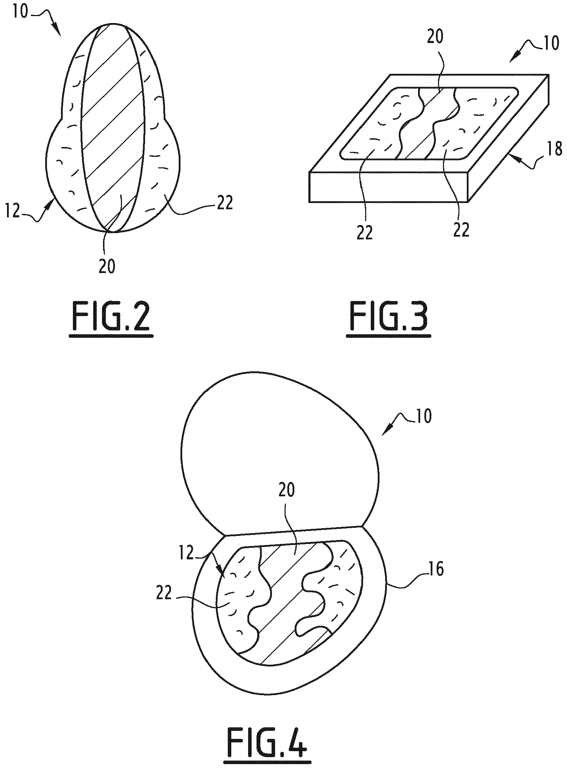

This invention relates to a method for manufacturing three-dimensional objects 10 comprising a cosmetic composition 12 or formed from a cosmetic composition 12, of which examples are shown in figures 2 to 4, using an apparatus for manufacture by depositing binder on powder, of which an example is shown in figure 1.

The method according to the invention is intended to manufacture three-dimensional objects 10 formed of a cosmetic composition 12, such as shown for example in figure 2, to be provided directly to the user or to be inserted into a separately manufactured packaging 16 of the cosmetic composition 12 such as shown in figure 4.

In an alternative, shown in figure 3, the method according to the invention is also intended to manufacture by additive deposit three-dimensional objects 10 comprising, in addition to the cosmetic composition 12, a substrate 18 bearing the cosmetic composition 12, the substrate 18 being manufactured simultaneously by spraying of binder on powder with the cosmetic composition 12.

According to the method of the invention, the cosmetic composition 12, and if applicable the substrate 18, are formed of a plurality of successive layers 19 each comprising at least one powder and at least one local binder of the powder, with layers 19 deposited on each other.

In this example, the binder forms as such a powder binding activator. Alternatively, a portion of the binder is dispersed in powder form in the powder and is activated by an activator added subsequently into the mix of binder and powder.

Advantageously, several different binders are used to form the cosmetic composition, by being deposited within the same layer or in different layers.

The different binders have for example different compositions, in order to form, within the cosmetic composition 12, regions 20, 22 with a different composition and/or appearance, for example in terms of chemical nature, mechanical properties and/or colors, as shown for example in figure 2 or 3, or shadings of composition and of color.

In particular, different binders have different colors. These colors are in particular base colors (for example black, yellow, cyan, magenta) making it possible to create via mixing a complete range of different colors.

Alternatively, the binder or binders have a monochrome color, or an absence of color. The color of each point of the cosmetic composition is then provided by spraying droplets of an ink or of several inks of different colors coming from one or a plurality of printing cartridges.

The thickness of each layer 19 forming the three-dimensional object 10 is for example less than 1 mm and is in particular between 50 microns and 200 microns.

Each layer 19 comprises at least one filled area formed of at least one powder and of at least one binder of the powder. Optionally, each layer 19 comprises empty areas defined by adjacent filled areas, according to the desired shape of the three-dimensional object 10.

At ambient temperature, for example at 25 °C, the cosmetic composition is structured. "Structured" means in particular, in the sense of this invention, that the cosmetic composition has its own mechanical resistance, i.e. it spontaneously retains its shape, throughout the entire lifetime of the product in the absence of external stress. This lifetime is for example at least one day, and in particular at least one year.

As such, the cosmetic composition in the three-dimensional object formed at the end of the method according to the invention is not liquid at ambient temperature, and does not spontaneously flow in a macroscopically visibly manner for the entire duration of the life of the product, in the absence of external stress. This lifetime is for example at least one day, and in particular at least one year.

Preferably, the cosmetic composition is solid. In this case, it can be grasped and moved by the user, without flowing.

According to the invention, the cosmetic composition is recoverable. "Recoverable" means in particular, in the sense of this invention, that at least a portion of the cosmetic composition can be applied on a body surface of the user and that the composition is capable of being at least partially detached from the three-dimensional object in order to remain on the body surface.

Advantageously, the cosmetic composition is recoverable by friction between the body surface and the cosmetic composition, without physical deterioration of the body surface. Alternatively, the cosmetic composition is recoverable by friction between an applicator and the cosmetic composition.

In one alternative, the cosmetic composition is recoverable by soaking in a biologically compatible liquid in order to at least partially detach it from the three-dimensional object and apply it on the body surface.

In one alternative, the cosmetic composition can be restored by prior heating of the three-dimensional object at a biologically compatible temperature, for example less than 60 °C.

The cosmetic composition is preferably deliquescent, i.e. a portion of the powder, optionally carrying binder is able to be detached from the rest of the cosmetic composition under the effect of a mechanical action.

Advantageously, the cosmetic composition is chosen from a colored cosmetic composition, and in particular a makeup composition for the skin and/or mucosa.

The cosmetic composition is for example in the form of a makeup powder, a hybrid powder or a wet powder.

Alternatively, the three-dimensional object forms a deodorant and/or antiperspirant product, a soap, a solid shampoo or/and a solid perfume.

In particular such a composition can be a foundation, a blush, a powder, a blusher or eye shadow, an anti-wrinkle compound, a lipstick or a lip gloss, optionally having care or treatment properties.

This can be a colored makeup composition (beige or green) intended to correct the color of the foundation.

A composition can also form a makeup composition or nail or eyelash care.

The powder present in the cosmetic composition advantageously has an average particle size between for example 0.1 µm and 150 µm, preferably between 0.1 µm and 100µm. Equipment making it possible to take this measurement is the "Mastersizer 3000" from Malvern, such as described in US 6,778,271 or in GB2340932.

This technique consists in measuring the intensity of the light diffused during the passage of a laser beam through a sample of dispersed particles. This data is then analyzed in order to calculate the size of the particles that created the diffraction image.

It can be used for the liquid process and the dry process. The choice of the method depends on the powder to be analyzed. Those skilled in the art use the module that corresponds to the method chosen and take the measurement.

These grains can be spheroids or particles of irregular shape, and have a size between 0.1 microns and 100 microns.

The cosmetic powder mass content in the cosmetic composition, after forming the three-dimensional object, is greater than 40%, in particular greater than 85%, advantageously greater than 90%.

In the case of a makeup powder, the cosmetic powder mass content is greater than 80%, and is in particular between 85% and 95%.

In the case of a hybrid powder, the cosmetic powder mass content is advantageously between 60% and 90%.

The powder comprises for example fillers, polymers, pigments and/or fibers.

The term "fillers" should be understood for the purposes of the invention to denote inorganic or synthetic colorless or white particles of any shape, insoluble in the medium of the composition regardless of the temperature at which the composition is manufactured. These fillers may particularly be used to modify the rheology or texture of the composition.

The fillers may be mineral or organic particles of any shape, in sheet, spherical or oblong form, regardless of the crystallographic shape (for example sheet, cubic, hexagonal, orthorhombic, etc). Mention may be made of talc, mica, silica, kaolin, polyamide, poly-β-alanine and polyethylene powders, tetrafluoroethylene polymer powders, lauroyl-lysine, starch, boron nitride, polymeric hollow microspheres such as those of polyvinylidene chloride/acrylonitrile of acrylic acid copolymers and silicone resin microbeads, elastomer polyorganosiloxane particles, precipitated calcium carbonate, magnesium carbonate and hydro-carbonate, hydroxyapatite, hollow silica microspheres, glass or ceramic microcapsules, metallic soaps derived from carboxylic organic acids having 8 to 22 carbon atoms, preferably from 12 to 18 carbon atoms, for example zinc, magnesium or lithium stearate, zinc laurate, magnesium myristate.

This can also be particles containing a copolymer, said copolymer comprising trimethylol hexyllactone. In particular, it may be a copolymer of hexamethylene diisocyanate/trimethylol hexyllactone.

The powder can comprise generally spherical particles of at least one surface-stabilized polymer, in particular in the form of nanoparticles of polymers. The nanoparticles are preferably of a size between 5 nm and 600 nm.

Radical polymers, polycondensates, and even polymers of natural origin can as such be used. The polymer can be chosen by those skilled in the art according to its properties, according to the subsequent application desired for the composition.

As such, the polymer can be film-forming or non-film-forming; in this second case, it can in particular have the form of a crosslinked polymer.

It is therefore possible to use film-forming polymers, preferably having a low glass transition temperature (Tg), less than or equal to ambient temperature.

It is also possible to use non-film-forming polymers, optionally crosslinked, which can be used as fillers dispersed in a stable manner in an oil.

The polymers that can be used in the context of this invention preferably have a molecular weight of about 2,000 to 10,000,000, and a glass transition temperature of - 100°C to 300°C. When the polymer has a Tg that is too high for the desired application, it can be combined with a plasticizer so as to lower the Tg of the mixture used. The plasticizer can be chosen from the standard plasticizers used in the field of application and in particular from the components that can be solvents of the polymer.

Of the crosslinked film-forming polymers, mention may be made of radical, acrylic or vinyl homopolymers or copolymers, preferably with a Tg less than or equal to 30°C. Of the non-film-forming polymers, mention may be made of radical, vinyl or acrylic homopolymers or copolymers, optionally crosslinked, preferably having a Tg greater than or equal to 40°C, such as methyl polymethacrylate, polystyrene or tert-butyl polyacrylate.

The pigments are chosen for example from organic pigments, mineral pigments and nacres.

The term "nacres" should be understood to mean iridescent or non-iridescent colored particles of any shape, which are in particular produced by certain mollusks in their shell or else are synthesized and which exhibit a color effect by optical interference.

The nacres may be selected from pearlescent pigments such as titanium mica coated with iron oxide, titanium mica coated with bismuth oxychloride, titanium mica coated with chromium oxide, titanium mica coated with an organic dye, and pearlescent pigments based on bismuth oxychloride. This may also involve mica particles at the surface whereof are superposed at least two successive layers of metal oxides and/or of organic dyes.

By way of example of nacres, mention may also be made of natural mica coated with titanium oxide, with iron oxide, with natural pigment or with bismuth oxychloride.

The nacres may more particularly possess a yellow, pink, red, bronze, orange, brown, gold and/or copper color or glint.

The fibers are chosen for example from polyamide fibers such as nylon fibers.

The binder mass content in the cosmetic composition is preferably between 5% and 60%.

In the case of a makeup powder, this mass content is advantageously between 5% and 15%. In the case of a hybrid powder, the binder mass content is advantageously between 10% and 40%.

Advantageously, the binder is able to bind the powder by means of mere contact with the powder.

The binder is then at least partially liquid at ambient temperature, for example 25°C.

By "at least partially liquid" we generally mean that the binder is able to flow under the effect of its own weight. In particular, the binder is able to flow through an extrusion nozzle or printing head.

An extrusion nozzle is a basic element for dosing, for example cylindrical. A printing head is an element of a printer in charge of spraying drops of ink. A printing head comprises a multitude of nozzles.

In general, the spraying of drops in a printing head is caused by an active means of movement, such as a piezoelectric element.

The "at least partially liquid" binder is entirely liquid, or comprises a liquid phase in which are dispersed solid elements, which flow by the intermediary of the liquid phase.

Advantageously, the binder is deposited in the form of droplets of liquid which are sprayed using a nozzle or printing head onto a layer of powder devoid of binder.

The viscosity of the binder, taken at its depositing temperature on the nozzle or printing head is for example less than 5 mPa.s and in particular between 0.5 mPa.s and 3 mPa.s.

In one alternative, the binder is at least partially in liquid form under heat.

It is for example intended to be heated in order to be deposited in liquid form in a layer of powder, then to at least partially solidify, after it is deposited in a layer of powder.

"Under heat" means in particular above the melting point of the binder.

For the purposes of the invention, the melting temperature is the temperature of the most endothermic peak observed in thermal analysis (DSC), such as described in ISO standard 11357-3: 2011.

In this embodiment, the at least partially liquid binder is able to at least partially solidify by cooling.

By "at least partially solidify" we mean that the binder is able to be structured, in the sense defined hereinabove. In particular, the viscosity of the binder is able to increase. In particular, the binder is able to become solid.

The cooling advantageously changes the binder to a temperature less than the temperature that it had when it was deposited. This temperature is preferably less than the melting point of the binder.

The temperature loss of the binder during cooling is greater than 3°C, in particular greater than 5°C.

Alternatively, the binder can be activated by solvent evaporation.

The binder comprises a main binding agent intended to give a structure to the powder. It advantageously comprises a secondary binding agent in addition to the main agent.

The main binding agent is preferably chosen from oils, particularly silicone oils, or esters.

Mention can as such be made of hydrocarbon oils such as paraffin oil or petroleum jelly or vaseline; mink oil, tortoise oil, soybean oil, perhydrosqualene; sweet almond oil, calophyllum oil, palm oil, grape seed oil, sesame oil, corn oil, rapeseed oil, sunflower oil, cotton oil, castor, avocado, jojoba, olive oils or germs of cereals; esters of lanolin acid, of oleic acid, of lauric acid, of stearic acid; fatty esters, such as lisopropyl myristate, isopropyl palmitate, butyl stearate, hexyl laurate, diisopropyl adipate, isononyl isononanoate, 2-ethylhexyl palmitate, 2-hexyl decyl laurate, 2-octyldodecyl palmitate, 2-octyldodecyl myristate or lactate, 2-diethylhexyl succinate, diisostearyl malate, glycerin or diglycerin triisostearate; higher fatty acids such as myristic acid, palmitic acid, stearic acid, behenic acid, oleic acid, linoleic acid, linolenic acid or isostearic acid; higher fatty alcohols such as cetanol, stearyl alcohol or oleic alcohol, linoleic alcohol or linolenic alcohol, isostearyl alcohol or octyl dodecanol; silicone oils such as PDMS, optionally phenylated such as phenyltrimethicones or optionally substituted with aliphatic and/or aromatic groups, optionally fluorinated, or with functional groups such as hydroxyl, thiol and/or amine groups; polysiloxanes modified by fatty acids, fatty alcohols or polyoxyalkylenes, fluorinated silicones, perfluorinated oils. Volatile oils can also be used, such as cyclotetradimethylsiloxane, cyclopentadimethylsiloxane, cyclohexadimethylsiloxane, methylhexyldimethylsiloxane or isoparaffins such as 'ISOPARs', in particular isododecane.

The or each binder contained in the cosmetic composition, forms a network for maintaining the composition, in particular the powder contained in the composition. This network breaks on the surface during the application of the cosmetic product, allowing for the restoration of the composition.

The additional agent is chosen from water, an alcohol, in particular methanol, ethanol, propanol, a polymer, in particular a polyvinyl alcohol, or a polymer resin, a ceramic precursor, such as a polycarobisilazane or a mineral precursor, in particular with a silica base.

The manufacturing method according to the invention is implemented in an apparatus 50 via the manufacture by deposit of binder on successive layers of powder, of which an example is diagrammatically shown in figure 1.

The apparatus 50 comprises a formation assembly 51 of successive layers of powder.

The apparatus 50 comprises at least one nozzle or printing head 52 intended for the distribution of at least one powder binding activator in liquid form, and, for each binding activator distributed by the nozzle or printing head 52, a container 54 for the packaging of the binding activator, and a conveying assembly 56 of the binding activator between the container 54 and the nozzle or printing head 52.

For example, when several binding activators for different colors are used, the apparatus 50 advantageously comprises a nozzle or printing head per color.

The apparatus 50 comprises a substrate surface 58, able to carry the successive layers of powder, and an assembly 60 of relative displacement of the nozzle or printing head 52 with respect to the substrate surface 58.

The apparatus 50 also comprises a control unit 62 for the formation assembly 51, for the displacement assembly 60 and for the conveying assembly 56. It advantageously comprises a man-machine interface 64.

The formation assembly 51 comprises a powder container 65, and a member for dispensing powder 66 to the substrate surface 58 or to a previous layer of powder 19.

In the example shown in figure 1, the powder container 65 is defined downwards by a mobile piston 67, able to move upwards in order to maintain the level of powder in the container 65, after application of a layer 19.

The member for dispensing powder 66 here comprises a movably mounted roller in the container 65, on the upper surface of the powder, in order to push a layer of powder laterally with regards to the substrate surface 58, directly on this surface 58, or on a previous layer of powder 19 carried by the substrate surface 58.

Each layer of powder 19 formed as such is as such plane. It is devoid of macroscopic relief of a height greater than 4 times the average thickness of the layer 19.

The average thickness of the layer of powder 19 is less than 1 mm and is generally between 50 microns and 200 microns.

In this example, the apparatus 50 comprises at least one nozzle or printing head 52 that distributes a plurality of different binding activators, obtained from several respective containers 54.

The nozzle or printing head 52 defines at least one dispensing orifice of the binding activator. Advantageously, it is able to distribute the binding activator in the form of successive droplets which are sprayed towards the substrate surface 58 on a layer of powder 19 that has just been deposited.

Each droplet preferably has a mass less than 100 ng, and is for example between 30 ng and 100 ng. The distance separating the dispensing orifice of the layer of powder 19 is preferable less than 5 mm, and is in particular between 0.5 mm and 1.5 mm.

As such, each droplet or set of droplets sprayed in a given position of the nozzle or printing head 52 is able to define an area of the layer 19 forming a "pixel" on the layer of powder 19. The composition and/or appearance of each pixel, in particular its color, can as such be defined by the nature of the binding activator or activators added in the pixel.

In the particular case where the binder is a liquid under heat, each container 54 is advantageously provided with a heating system 68 able to maintain the binding activator in liquid form in the container 154.

The conveying assembly 56 comprises a duct 70 for the intake of binding activator, connecting the container 54 to the nozzle or printing head 52, a system (not shown) for pumping the binding activator through the duct 70, and advantageously at least one control element 72 for the flow of the binding activator cosmetic material flowing through the intake duct 70, controlled by the unit 62.

The control element 72 is for example a valve controlled between a configuration for blocking the flow of the binding activator and a configuration for the distribution of the binding activator.

In one alternative, the conveying assembly 56 is devoid of a control element 72, with the flow of the cosmetic material being controlled by the pumping system.

In the particular case where the binder is a liquid under heat, the each duct 70 and the nozzle or printing head 52 are thermally insulated in order to maintain the binding activator in liquid form during its conveying.

In this example, the substrate surface 58 is defined on a vertically movable piston 73. After the forming of each layer 19, and the application of a binding activator ion at least one region of the layer 19, the piston 73 is able to be moved downwards, in order to lower the layer 19 that has just been formed under the upper surface of the powder present in the container. This allows for the application of another layer of powder devoid of binding activator on the one that has just received the binding activator through the intermediary of the member for dispensing powder 66.

The displacement assembly 60 is able to allow for the relative positioning according to three axes of the nozzle or printing head 52 with respect to the substrate surface 58, or with respect to the previous layer 19 deposited on the substrate surface 58.

The displacement assembly 60 is controlled by the unit 44 in order to horizontally displace the nozzle or printing head 52 with respect to the previous layer 19 or with respect to the substrate surface 58, in order to selectively deposit at least one droplet of binding activator at a predetermined location on the layer being formed, corresponding to a pixel such as defined hereinabove.

The displacement assembly 60 is furthermore controlled by the unit 62 in order to vertically maintain the vertical distance between the nozzle or the printing head 52 and the support surface 58 or the previous layer.

In this example, the displacement assembly 60 comprises a mechanism 74 for the three-dimensional displacement of the nozzle or printing head 52, and a mechanism 76 for the vertical displacement of the substrate surface 58.

The control unit 62 is able to calculate, using a digital model of the three-dimensional object, the spatial arrangement of the binding activator within each layer of powder 19 to deposit it using the or each nozzle or printing head 52, and, within each layer 19 to be formed, the exact composition of each area of the binding activator in each area of the layer 19.

On this basis, the control unit 62 is able to control the corresponding relative displacement of each nozzle or printing head 52 in relation to the substrate surface 58 in order to deposit a given binding activator onto each zone to be formed of each layer 19, and control the controlling of the conveying assembly 56, in particular the pumping system and the control element 72, at each position of the nozzle or printing head 52, according to the activator desired in this area.

The man-machine interface 64, when it is present, is able to allow a user to define the shape of a three-dimensional object to be create, for example by selection of a digital model file in a database of digital models, or by importing a predefined digital model file, with a view to its use by the control unit 62.

An example method according to a preferred embodiment of the invention will now be described.

Advantageously, the user initially defines using the man-machine interface 64 the shape of the composition of the object to be created, by example by choosing a digital model file in the database of digital models or by importing this file.

Then, the digital model file is sent to the control unit 62. The control unit 62 then defines the shape of the different layers 19 intended to form the three-dimensional object, and within each layer the composition in binding activator of each area of the layer defining a "pixel".

The control unit 62 then calculates the displacement required for the or each nozzle or printing head 52 during the construction of each layer 19, and determines if a binding activator must be added at a given position of the nozzle or binding activator 52 and where applicable, what activator(s) must be added at each given position of the nozzle or binding activator 52.

Each binding activator is prepared in a container 54. At least one container 54 then contains a binding activator comprising at least one binder.

Then, the control unit 62 controls the formation assembly 51, displacement assembly 60 and the conveying assembly 50 based on the calculations made previously in order to successively form the various layers 19 on each other.

For each layer 19 to be formed, the control unit 62 first controls the formation assembly 51 in order to deposit a layer of powder with respect to the previous layer 19 or the substrate surface 58 where applicable. The layer of powder is plane and is devoid of binder.

The control unit displaces the nozzle or printing head 52 in each area to be formed of the layer 19 and sprays at least one binding activator, advantageously in the form of liquid droplets, against the layer of powder 19 that has just been deposited.

The droplets are sprayed directly on the layer of powder 19 or against the substrate surface 58.

During this operation, the control unit 62 substantially maintains constant the vertical distance between the nozzle or printing head 52 and the previous layer 19 and/or the substrate surface 58.

The binding activator binds the powder in the chosen regions of the layer 19.

In this example, the color of each pixel of the layer 19 is defined in particular by the color of the binding activator or of the mix of binding activators sprayed on this pixel.

Once the layer 19 is formed, displacement assembly 60 is controlled in order to separate the previously formed layer 19 from the nozzle or printing head 52.

Another layer of powder is applied onto the previous layer by the member for dispensing powder 66.

The preceding operations are repeated in order to add the different layers 19 on each other.

Once all of the layers 19 of the three-dimensional object are formed, the powder not bound, present in the areas devoid of binding activator is removed from the three-dimensional object 10. The three-dimensional object 10 is as such cleaned.

According to the invention, at least one binding activator is applied onto the selected areas of several layers 19, and in certain cases all of the layers 19 are formed in order to construct in an additive manner the structured cosmetic composition within the three-dimensional object 10.

It is as such possible to construct three-dimensional objects 10 that comprise or are formed from a cosmetic composition having chosen and complex forms, different compositions and appearances according to the area, shadings of appearance and composition, through the simple local control of the binding activator to be added in each area of a given layer 19 of the three-dimensional object 10.

In an alternative (not shown), the apparatus 50 comprises an additional printing head, able to spray one or a plurality of inks contained in at least one printing cartridge.

The ink or inks are sprayed onto each pixel, as a complement to the binding activator sprayed on this pixel. The color of each pixel is therefore obtained by the mix of the binding activator or activators sprayed onto the pixel and by the ink or inks sprayed onto the pixel.

The color of each pixel of each layer 19 of the cosmetic composition can therefore be predefined, and obtained precisely on the cosmetic composition manufactured by the method according to the invention.

In particular, each region of the cosmetic composition can be manufactured with a color chosen by the user. For example, the apparatus 50 can comprise a color analysis device, in particular a spectrophotometer able to determine the characteristic data of a color chosen by the user, taken for example from a range of colors or from an accessory such as a piece of clothing.

The spectrophotometer is for example of the type marketed by "X-Rite".

The apparatus 50 is then able to use the data to construct a cosmetic composition that has at least one region of color similar to that determined by the color analysis device, either by using a mix of suitable binding activators, or by using a mix of inks contained in a printing cartridge.

In an alternative, at least one binding activator added in at least one layer 19 is intended to form a substrate 18 of the cosmetic composition which is a part of the three-dimensional object 10. Advantageously the substrate 18 formed as such cannot be restored after solidification, conversely to the cosmetic composition.

Examples of activators for the substrate 18 are binders containing a polymer soluble in alcohols, in water and/or in cetones, such as polyvinyl butyral (PVB), polyvinyl acetate (PVAC) or polyvinyl alcohol (PVAL).

Alternatively, these binders are adhesives or thermosetting materials.

The binding activator intended to form the substrate 18 is then sprayed using a specific nozzle or printing head 52.

In this alternative, at least one partially liquid binding activator layer intended for forming the substrate is deposited during the forming of the three-dimensional object.

Onto at least one layer of powder is added either exclusively a first binding activator intended to form a region of the substrate, or a second binding activator intended to form a region of the cosmetic composition and a first binding activator intended to form a region of the substrate.

In this case, the apparatus 50 comprises at least one container 54 for the packaging of the substrate material and a conveying assembly 56 of the substrate material between the container 54 and the nozzle or printing head 52.

The control unit 62 is able to determine if the substrate material must be added at a given position of the nozzle or printing head 52, as a complement or as a replacement for a cosmetic material.

In another alternative, the cosmetic composition defines at least one central hollow region containing loose powder devoid of a binding activator, encapsulated in a region formed of bound powder.

Advantageously, the manufacturing method according to the invention is implemented for the creation of prototypes of three-dimensional objects comprising or formed of a structured cosmetic composition.

Alternatively, the manufacturing method according to the invention is implemented for the creation in production of finished products, for example in a factory or in a store.

## Claims

1. Method for the additive manufacture of a three-dimensional object (10) comprising or forming a cosmetic composition, the cosmetic composition comprising at least one cosmetic powder and at least one binder, the method comprising the following steps:
(a) forming a plane powder layer (19) comprising at least one cosmetic powder;
(b) applying a powder binding activator and binding the powder in at least a first region of the powder layer (19);
(c) forming an additional plane powder layer (19) comprising at least one cosmetic powder, the additional layer (19) at least partially covering the previous layer (19);
(d) applying a powder binding activator and binding the powder in at least a second region of the additional powder layer (19);
(e) repeating steps (c) to (d) until the three-dimensional object (10) is formed,
wherein, after the three-dimensional object (10) is formed, the cosmetic composition comprised in the three-dimensional object (10) or forming the three-dimensional object (10) is recoverable, in that at least a portion of the cosmetic composition comprised in the three-dimensional object (10) or forming the three-dimensional object (10) can be applied on a body surface of a user, the composition being capable of being at least partially detached from the three-dimensional object (10) in order to remain on the body surface.

2. Method according to claim 1, wherein the cosmetic powder contains fillers, pigments, colorants, polymers and/or fibers.

3. Method according to claim 2, wherein the pigments are chosen from organic pigments, mineral pigments, nacres and mixtures thereof.

4. Method according to any of the above claims, wherein the cosmetic composition comprises at least 40% powder by mass.

5. Method according to any of the above claims, wherein a first binding activator supplied in the application step has a first color, a second binding activator supplied in the application step having a second color, the cosmetic composition formed comprising the first binding activator and the second binding activator on the same layer (19) or on different layers (19).

6. Method according to any of the above claims, comprising a step for depositing at least one ink from a printing cartridge on at least one powder layer (19) formed in step (a) or in step (d).

7. Method according to any of the above claims, wherein the powder binding activator comprises an at least partially liquid binder, the binder being suitable for being activated by means of mere contact with the powder, by cooling, and/or by solvent evaporation.

8. Method according to claim 7, wherein the binder comprises at least one binding agent chosen from oils, particularly silicone oils, and esters.

9. Method according to claim 8, wherein the binder comprises at least one additional agent chosen from water, an alcohol, a polymer, a ceramic or mineral precursor.

10. Method according to any of the above claims, wherein the cosmetic composition obtained after forming the three-dimensional object (10) is a make-up powder, a hybrid powder, or a wet powder, a deodorant and/or antiperspirant powder product, a solid shampoo or soap powder.

11. Method according to any of the above claims, comprising, after forming the three-dimensional object (10), a step for cleaning the three-dimensional object (10) to remove powder not bound with the three-dimensional object (10).

12. Method according to any of the above claims, wherein a non-reversible powder binding activator is added on at least a third region of a powder layer (19) to form a part of a cosmetic composition substrate.

13. Method according to any of the above claims, comprising the following steps:
- defining a predetermined shape and/or color of a three-dimensional object (10);
- determining the dimensions and local composition of the regions of each powder layer (19) whereon a powder binding activator is to be applied, on the basis of the predetermined shape.

14. Method according to claim 13, comprising a preliminary step for determining characteristics of a color of an element using a color analysis device, determining the local composition of at least one region of a powder layer (19) whereon the powder binding activator is to be applied being performed on the basis of the color characteristics determined using the color analysis device.

15. Three-dimensional object (10) comprising or forming a cosmetic composition, wherein the cosmetic composition comprises at least one cosmetic powder and at least one binder, the cosmetic composition being formed from a plurality of layers (19) deposited on each other, the cosmetic composition being recoverable, in that at least a portion of the cosmetic composition comprised in the three-dimensional object (10) or forming the three-dimensional object (10) can be applied on a body surface of a user, the composition being capable of being at least partially detached from the three-dimensional object (10) in order to remain on the body surface.

## Patentansprüche

1. Verfahren zur Additivherstellung eines eine kosmetische Zusammensetzung umfassenden oder bildenden dreidimensionalen Objekts (10), wobei die kosmetische Zusammensetzung mindestens einen kosmetischen Puder und mindestens ein Bindemittel umfasst, wobei das Verfahren folgende Schritte umfasst:
a) Bilden einer mindestens einen kosmetischen Puder umfassenden ebenen Puderschicht (19);
b) Auftragen eines Puderbindemittelaktivators und Binden des Puders zumindest in einem ersten Bereich der Puderschicht (19);
c) Bilden einer zusätzlichen mindestens einen kosmetischen Puder umfassenden ebenen Puderschicht (19), wobei die zusätzliche Puderschicht (19) die vorige Schicht (19) zumindest teilweise bedeckt;
d) Auftragen eines Puderbindemittelaktivators und Binden des Puders zumindest in einem zweiten Bereich der zusätzlichen Puderschicht (19);
e) Wiederholen der Schritte (c) bis (d), bis das dreidimensionale Objekt (10) gebildet ist,
wobei nach dem Bilden des dreidimensionalen Objekts (10) die im dreidimensionalen Objekt (10) enthaltene oder das dreidimensionale Objekt (10) bildende kosmetische Zusammensetzung rückgewinnbar ist dadurch, dass zumindest ein Bereich der im dreidimensionalen Objekt (10) enthaltenen oder das dreidimensionale Objekt (10) bildenden kosmetischen Zusammensetzung auf eine Körperfläche des Benutzers aufgetragen werden kann, wobei die Zusammensetzung zumindest teilweise vom dreidimensionalen Objekt (10) lösbar ist, um auf der Körperfläche zu verbleiben.

2. Verfahren nach Anspruch 1, wobei das kosmetische Puder Füllmasse, Pigmente, Farbstoffe, Polymere und/oder Fasern enthält.

3. Verfahren nach Anspruch 2, wobei die Pigmente ausgewählt sind aus organischen Pigmenten, mineralischen Pigmenten, Perlmutt, und Mischungen davon.

4. Verfahren nach einem der vorangehenden Ansprüche, wobei die kosmetische Zusammensetzung mindestens 40 Massenprozent Puder enthält.

5. Verfahren nach einem der vorangehenden Ansprüche, wobei ein im Schritt des Auftragens zugeführter erster Bindemittelaktivator eine erste Farbe aufweist und ein im Schritt des Auftragens zugeführter zweiter Bindemittelaktivator eine zweite Farbe aufweist, wobei die gebildete kosmetische Zusammensetzung den ersten Bindemittelaktivator und den zweiten Bindemittelaktivator auf derselben Schicht (19) oder auf unterschiedlichen Schichten (19) umfasst.

6. Verfahren nach einem der vorangehenden Ansprüche, umfassend einen Schritt zum Ablagern zumindest einer Tinte aus einer Druckerpatrone auf zumindest einer im Schritt (a) oder Schritt (d) gebildeten Puderschicht (19).

7. Verfahren nach einem der vorangehenden Ansprüche, wobei der Puderbindemittelaktivator ein zumindest teilweise flüssiges Bindemittel umfasst, wobei das Bindemittel geeignet ist, allein durch Berührung mit dem Puder, durch Kühlen und/oder durch Lösungsmittelverdunstung aktiviert zu werden.

8. Verfahren nach Anspruch 7, wobei das Bindemittel zumindest ein Bindemittel umfasst, das ausgewählt ist aus Ölen, insbesondere Silikonölen, und Estern.

9. Verfahren nach Anspruch 8, wobei das Bindemittel zumindest einen zusätzlichen Wirkstoff umfasst, der ausgewählt ist aus Wasser, einem Alkohol, einem Polymer, einem keramischen oder mineralischen Vorläuferstoff.

10. Verfahren nach einem der vorangehenden Ansprüche, wobei die kosmetische Zusammensetzung nach Bilden des dreidimensionalen Objekts (10) ein Schminkpuder, ein Hybridpuder oder ein Nass-Puder, ein Deodorant- und/oder ein Antitranspirant-Puderprodukt, ein Trockenshampoo oder ein Seifenpulver ist.

11. Verfahren nach einem der vorangehenden Ansprüche, nach Bilden des dreidimensionalen Objekts (10), einen Schritt zum Reinigen des dreidimensionalen Objekts (10) umfassend, um Puder, welcher nicht an das dreidimensionale Objekt (10) gebunden ist, zu entfernen.

12. Verfahren nach einem der vorangehenden Ansprüche, wobei ein irreversibler Puderbindemittelaktivator zumindest auf einen dritten Bereich der Puderschicht (19) hinzugefügt wird, um einen Teil des Substrats der kosmetischen Zusammensetzung zu bilden.

13. Verfahren nach einem der vorangehenden Ansprüche, umfassend die folgenden Schritte:
- Definieren einer vorbestimmten Form und/oder Farbe eines dreidimensionalen Objekts (10);
- Bestimmen der Dimensionen und lokalen Zusammensetzung der Bereiche jeder Puderschicht (19), auf denen ein Puderbindemittelaktivator aufgetragen werden soll, auf Basis der vorbestimmten Form.

14. Verfahren nach Anspruch 13, umfassend einen vorläufigen Schritt des Bestimmens von Eigenschaften einer Farbe eines Elements mittels einer Farbanalysevorrichtung, Bestimmen der örtlichen Zusammensetzung zumindest einer Region einer Puderschicht (19), auf der der Puderbindemittelaktivator aufgetragen werden soll, durchgeführt auf Basis der mittels der Farbanalysevorrichtung bestimmten Farbeigenschaften.

15. Dreidimensionales Objekt (10), eine kosmetische Zusammensetzung umfassend oder bildend, wobei die kosmetische Zusammensetzung mindestens einen kosmetischen Puder und mindestens ein Bindemittel umfasst und die kosmetische Zusammensetzung aus einer Mehrzahl von aufeinander abgelagerten Schichten (19) gebildet ist, wobei die kosmetische Zusammensetzung rückgewinnbar ist dadurch, dass zumindest ein Bereich der im dreidimensionalen Objekt (10) enthaltenen oder das dreidimensionale Objekt (10) bildenden kosmetischen Zusammensetzung auf einer Körperfläche des Benutzers aufgetragen werden kann, wobei die Zusammensetzung zumindest teilweise vom dreidimensionalen Objekt (10) lösbar ist, um auf der Körperfläche zu verbleiben.

## Revendications

1. Procédé de fabrication additive d'un objet tridimensionnel (10) comprenant ou constituant une composition cosmétique, la composition cosmétique comprenant au moins une poudre cosmétique et au moins un liant, le procédé comprenant les étapes suivantes :
(a) formation d'une couche (19) plane de poudre comprenant au moins une poudre cosmétique ;
(b) application d'un activateur de liaison de la poudre et liaison de la poudre dans au moins une première région de la couche (19) de poudre ;
(c) formation d'une couche (19) plane additionnelle de poudre comprenant au moins une poudre cosmétique, la couche (19) additionnelle recouvrant au moins partiellement la couche (19) précédente ;
(d) application d'un activateur de liaison de la poudre et liaison de la poudre dans au moins une deuxième région de la couche (19) supplémentaire de poudre ;
(e) répétition des étapes (c) à (d) jusqu'à formation de l'objet tridimensionnel (10),
dans lequel, la composition cosmétique comprise dans l'objet tridimensionnel (10) ou formant l'objet tridimensionnel (10) est restituable après formation de l'objet tridimensionnel (10), en ce qu'au moins une partie de la composition cosmétique comprise dans l'objet tridimensionnel (10) ou constituant l'objet tridimensionnel (10) peut être appliquée sur une surface corporelle d'un utilisateur, la composition pouvant être au moins partiellement détachée de l'objet tridimensionnel (10) afin de rester sur la surface corporelle.

2. Procédé selon la revendication 1, dans lequel la poudre cosmétique contient des charges, des pigments, des colorants, des polymères et/ou des fibres.

3. Procédé selon la revendication 2, dans lequel les pigments sont choisis parmi des pigments organiques, des pigments minéraux, des nacres et leurs mélanges.

4. Procédé selon l'une quelconque des revendications précédentes, dans lequel la composition cosmétique comprend au moins 40 % en masse de poudre.

5. Procédé selon l'une quelconque des revendications précédentes, dans lequel un premier activateur de liaison fourni dans l'étape d'application présente une première couleur, un deuxième activateur de liaison fourni dans l'étape d'application présentant une deuxième couleur, la composition cosmétique formée comprenant le premier activateur de liaison et le deuxième activateur de liaison sur la même couche (19) ou sur des couches (19) différentes.

6. Procédé selon l'une quelconque des revendications précédentes, comprenant une étape de dépôt d'au moins une encre provenant d'une cartouche d'impression sur au moins une couche (19) de poudre formée dans l'étape (a) ou dans l'étape (d).

7. Procédé selon l'une quelconque des revendications précédentes, dans lequel l'activateur de liaison de poudre comprend un liant au moins partiellement liquide, le liant étant activable par simple contact avec la poudre, par refroidissement, et/ou par évaporation de solvant.

8. Procédé selon la revendication 7, dans lequel le liant comprend au moins un agent de liaison choisi parmi les huiles, notamment les huiles siliconées, et les esters.

9. Procédé selon la revendication 8, dans lequel le liant comprend au moins un agent additionnel choisi parmi l'eau, un alcool, un polymère, un précurseur céramique ou minéral.

10. Procédé selon l'une quelconque des revendications précédentes, dans lequel la composition cosmétique obtenue après formation de l'objet tridimensionnel (10) est une poudre de maquillage, une poudre hybride, ou une poudre wet, un déodorant et/ou un produit anti-transpirant en poudre, un shampoing solide ou un savon en poudre.

11. Procédé selon l'une quelconque des revendications précédentes, comportant, après la formation de l'objet tridimensionnel (10), une étape de nettoyage de l'objet tridimensionnel (10) pour enlever la poudre non liée à l'objet tridimensionnel (10).

12. Procédé selon l'une quelconque des revendications précédentes, dans lequel un activateur de liaison irréversible de la poudre est ajouté sur au moins une troisième région d'une couche de poudre (19) pour former une partie d'un support de la composition cosmétique.

13. Procédé selon l'une quelconque des revendications précédentes, comprenant les étapes suivantes :
- définition d'une forme et/ou couleur prédéterminée d'un objet tridimensionnel (10) ;
- détermination des dimensions et de la composition locale des régions de chaque couche (19) de poudre sur lesquelles un activateur de liaison de la poudre doit être appliqué, sur la base de la forme prédéterminée.

14. Procédé selon la revendication 13, comprenant une étape préalable de détermination de caractéristiques d'une couleur d'un élément au moyen d'un dispositif d'analyse de couleur, la détermination la composition locale d'au moins une région d'une couche (19) de poudre sur laquelle l'activateur de liaison de poudre doit être appliqué étant effectuée sur la base des caractéristiques de la couleur déterminées à l'aide du dispositif d'analyse de couleur.

15. Objet tridimensionnel (10) comprenant ou constituant une composition cosmétique, dans lequel la composition cosmétique comporte au moins une poudre cosmétique et au moins un liant, la composition cosmétique étant formée d'une pluralité de couches (19) déposées les unes sur les autres, la composition cosmétique étant restituable, en ce qu'au moins une partie de la composition cosmétique comprise dans l'objet tridimensionnel (10) ou constituant l'objet tridimensionnel (10) peut être appliquée sur une surface corporelle d'un utilisateur, la composition pouvant être au moins partiellement détachée de l'objet tridimensionnel (10) afin de rester sur la surface corporelle.
